# EUROPEAN PATENT SPECIFICATION

(11) **EP 2 355 443 B1**
(45) Date of publication and mention of the grant of the patent: **19.06.2019**
(21) Application number: 11152033.4
(22) Date of filing: 25.01.2011
(51) Int. Cl.: H04L 29/06, G06F 21/34

(54) **Network authentication method and device for implementing the same**
Netzwerkauthentifizierungsverfahren und Vorrichtung zu dessen Implementierung
Procédé d'authentification de réseau et dispositif pour sa mise en oeuvre

(30) Priority: 27.01.2010 TW 099102251
(43) Date of publication of application: 10.08.2011
(73) Proprietor: Keypasco AB, 411 15 Gothenburg (SE)
(72) Inventor: Lin, Maw-Tsong, 11463, Taipei City (TW)
(74) Representative: Zimmermann, Tankred Klaus

(56) References cited:
- WO-A2-2008/127431
- US-A1- 2008 298 588
- US-B1- 6 418 472

## Description

The present invention relates to a network authentication method and device, more particularly to a network authentication method and device adapted for authenticating a user end using software.

Currently, when a user wants to transfer money at a web bank provided by a banking institution, the user needs to input a unique user identification code (user ID) and a password to access the web bank. The user ID can be obtained using a card reader reading an integrated circuit card issued by the banking institution, or can be a preset code set by the user and certified by the banking institution. After accessing the web bank, the user needs to fill an electronic transfer sheet and to input a transfer password so as to complete the transfer.

Since the user ID, the password and the transfer password may be stolen, a token or an integrated circuit card is used to provide a one-time password (OTP) to be sent to a network server of the web bank for verifying the identity of the user. Further, a token or card reader including its own screen and keys, or a flash drive having public key infrastructure certificate can be used to prevent the user ID and the password from being stolen.

However, due to the variety of web transactions, increasing numbers of web users and web crimes, and continuously progress of criminal techniques, the current verification methods have the following drawbacks.

A network content provider needs to purchase an identity verification device for each user, and the cost of customer service for personalization, distribution and troubleshooting is considerable. Further, it is quite inconvenient to the user that the user needs to have different identity verification devices for different web sites. Moreover, aside from intercepting and stealing the user ID, the password and the transfer password, the hackers also try to manipulate transaction data. Therefore, the network content provider is often forced to change hardware equipments, and the cost for changing the hardware equipments is considerable.

US 2008/298588 A1 and WO 2008/127431 A1 relate to a computer security system for use in the identification and authentication of a user. In one aspect, a method for identifying and authenticating a user is provided. The method includes establishing a trust between a server machine and an agent on a user machine. The method further includes establishing a session key to encrypt communications between the server machine and the agent. The method also includes receiving a username and password for use in validating the user . Additionally, the method includes creating an executable binary for the extraction of device data from the user machine to uniquely identify the machine. In another aspect, a computer-readable medium including a set of instructions that when executed by a processor causes the processor to identify and authenticate the user is provided.; In a further aspect, a system for identifying and authenticating a user is provided.

US 6, 418, 472 B1 describes a system and method for controlling acces to an object. The system stores an object and a processor identifier. The system includes a verification agent that can access information embedded in a processor and then calculate from that embedded information a value that may be compared with the stored processor identifier. A comparison agent is used to compare that value with the processor identifier to determine whether the processor corresponds to the processor identifier. If the value that the verification agent returns matches the processor identifier, then the computer grants the user access to the object.

Therefore, an object of the present invention is to provide a network authentication method and device for authenticating a user end using software.

This object is achieved by the two methods as defined in the independent claims 1 and 6.

Accordingly, a network authentication method of the present invention is to be implemented using a network authentication device and a user end for authenticating the user end. The user end stores a terminal program and includes a plurality of hardware components each of which has a unique identification code.

The network authentication method comprises the steps of:
a) configuring the network authentication device to store hardware information associated with the identification codes of the hardware components of the user end;
b) when it is intended to verify identity of the user end, configuring the user end to execute the terminal program for scanning the hardware components thereof to obtain the identification codes of the hardware components of the user end, for establishing a hardware list according to the identification codes of the hardware components thus obtained, and for sending to the network authentication device verification data that is associated with the hardware list; and
c) configuring the network authentication device to verify identity of the user end based on relationship between the verification data received from the user end in step b) and the hardware information stored in step a).

Preferably, the network authentication method is to be implemented further using a network server, and step b) includes the sub-steps of:
b1) in response to a login request from the user end for accessing the network server through a first communication channel, configuring the network server to redirect the user end for connecting with the network authentication device through a second communication channel; and
b2) configuring the network authentication device to enable the user end to execute the terminal program.

Preferably, the network authentication method further comprises the steps of:
d) configuring the network authentication device to generate a key according to the hardware information stored therein, and to send the key to the user end and the network server;
e) when the user end intends to conduct an electronic transaction with the network server, configuring the user end to generate a first digital signature corresponding to transaction data of the electronic transaction using the key sent by the network authentication device and to send the transaction data and the first digital signature to the network server, and configuring the network server to generate a second digital signature corresponding to the transaction data received from the user end using the key sent by the network authentication device; and
f) configuring the network server to compare the first digital signature from the user end with the second digital signature generated thereby, and to determine that the transaction data was not tampered during transmission from the user end to the network server when the first digital signature conforms with the second digital signature.

According to another aspect of this invention, a network authentication device is used for authenticating a user end. The user end includes a plurality of hardware components each of which has a unique identification code, and is configured to scan the hardware components thereof to obtain the identification codes of the hardware components, and to establish verification data associated with the identification codes of the hardware components thus obtained.

The network authentication device comprises a database module for storing hardware information associated with the identification codes of the hardware components of the user end, and a verification module for verifying identity of the user end based on relationship between the verification data received from the user end and the hardware information stored in the database module.

Other features and advantages of the present invention will become apparent in the following detailed description of the preferred embodiments with reference to the accompanying drawings, of which:
Figure 1 is a block diagram illustrating a first preferred embodiment of a network authentication device according to the present invention;
Figure 2 is a flow chart illustrating a registration procedure of a network authentication method implemented using the network authentication device of the first preferred embodiment according to the present invention;
Figure 3 is a flow chart illustrating a login procedure of the network authentication method implemented using the network authentication device of the first preferred embodiment;
Figure 4 is a schematic diagram illustrating the network authentication device implementing the network security authentication method for processing a digital signature;
Figure 5 is a block diagram illustrating a second preferred embodiment of a network authentication device according to the present invention;
Figure 6 is a flow chart illustrating a registration procedure of a network authentication method implemented using the network authentication device of the second preferred embodiment according to the present invention;
Figure 7 is a block diagram illustrating the network authentication device of the second preferred embodiment that is configured to implement login and transaction procedures of the network authentication method of the present invention;
Figure 8 is a flow chart illustrating the login procedure of the network authentication method implemented using the network authentication device of the second preferred embodiment; and
Figure 9 is a flow chart illustrating the transaction procedure of the network authentication method implemented using the network authentication device of the second preferred embodiment.

Before the present invention is described in greater detail, it should be noted that like elements are denoted by the same reference numerals throughout the disclosure.

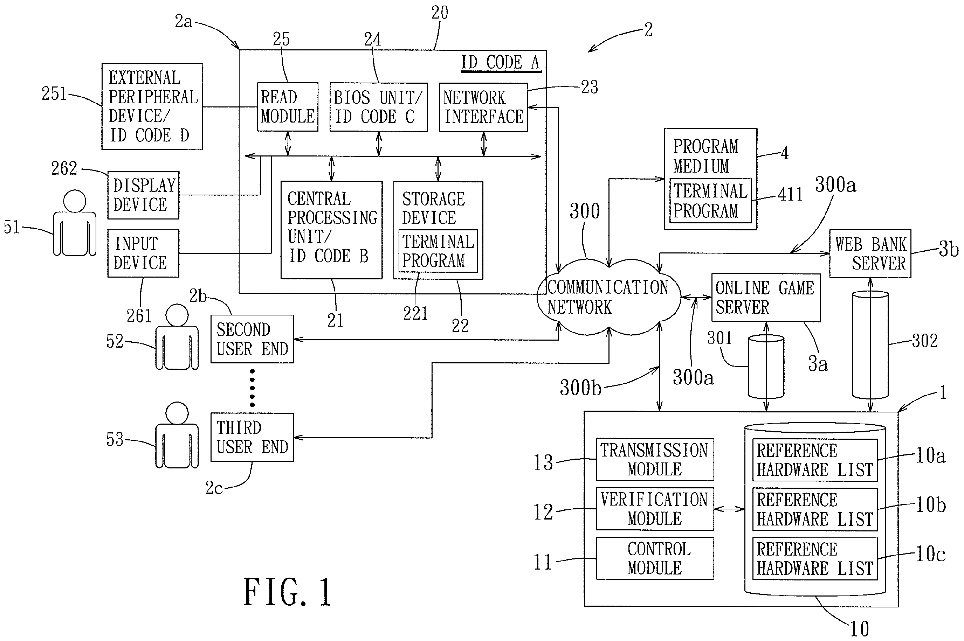

Referring to Figure 1, the first preferred embodiment of a network authentication device according to the present invention is a verification server 1 operable to cooperate with a plurality of user ends 2 and a network server 3 (e.g., an internet contents provider or ICP) to implement a network authentication method. The verification server 1 includes a database module 10, a control module 11, a verification module 12, and a transmission module 13. For exemplary purposes, the network server 3 may be, but is not limited to, an online game server 3a, a web bank server 3b, or any other server that provides a network service requiring identity verification, such as a portal website. The user ends 2 include first, second and third user ends 2a, 2b and 2c associated with first, second and third users 51, 52 and 53, respectively. The user ends 2a, 2b and 2c may be electronic equipment or handheld electronic devices capable of Internet browsing or data communications, such as notebook computers, smart phones, personal digital assistants, etc.. Particularly, the user ends 2 are connected to the network server 3 through a first communication channel 300a in a communication network 300, and are connected to the verification server 1 through a second communication channel 300b in the communication network 300 that is separate from the first communication channel 300a. Accordingly, it is relatively difficult to attack the first and second communication channels 300a and 300b simultaneously for stealing information associated with the users 51-53. Moreover, the network server 3 is connected to the verification server 1 through a special channel. For example, the online game server 3a and the web bank server 3b are connected to the verification server 1 through special channels 301 and 302, respectively.

Taking the first user end 2a as an example, the first user end 2a includes a motherboard 20, a central processing unit 21, a storage device 22, a network interface 23, a basic input/output system (BIOS) unit 24, a read module 25, an external peripheral device 251, an input device 261 and a display device 262. In this embodiment, the motherboard 20, the central processing unit 21 and the BIOS unit 24 have unique identification codes (A), (B) and (C), respectively. Further, the read module 25 is a universal serial bus (USB) interface, and the corresponding external peripheral device 251 is a USB storage device (e.g., a memory card or a USB flash drive) and has a unique identification code (D) . In other embodiments, the external peripheral device 251 may be a radio frequency identification (RFID) device or a near field communication (NFC) device. It should be noted that the unique identification code of the network interface 23 may be used for the network authentication method in other embodiments, and hardware components of the first user end 2a are also not limited to the disclosure herein.

Since each of the identification codes (A), (B), (C) and (D) of the hardware components (the motherboard 20, the central processing unit 21, the BIOS unit 24 and the external peripheral device 251) of the first user end 2a is unique, a combination of the identification codes (A), (B), (C) and (D) is certainly different from a combination of identification codes of hardware components of any one of other user ends 2. Thus, the combination of the identification codes of the first user end 2a is like a unique fingerprint of the first user end 2a, and can be used for verifying the identity of the first user 51. Therefore, it is not possible to use other user ends having different hardware components to verify the identity of the first user 51.

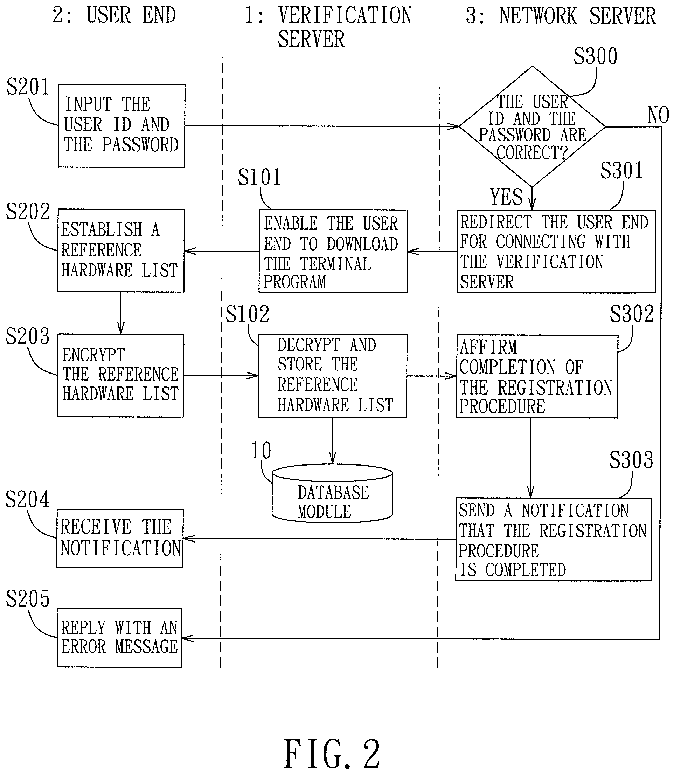

Referring to Figures 1 and 2, the verification server 1 cooperates with the first user end 2a and the network server 3 to implement a registration procedure of the network authentication method according to the present invention. The registration procedure of the network authentication method includes the following steps.

In step S201, the first user 51 inputs personal information, a user identification (ID), and a password using the input device 261 of the first user end 2a at a website provided by the network server 3 . The personal information, the user ID, and the password are transmitted to the network server 3 through the first communication channel 300a. In response to receipt of the personal information, the user ID and the password, the network server 3 is operable to check whether the personal information, the user ID and the password are correct in step S300. If affirmative, the network server 3 is operable to redirect the first user end 2a for connecting with the verification server 1 in step S301, so that the verification server 1 is operable to enable the first user end 2a to download a terminal program 411 from a program medium 4 in step S101. Otherwise, the network server 3 is operable to send an error message to the first user end 2a for displaying on the display device 262 of the first user end 2a in step S205.

It should be noted that, although the program medium 4 is an external website separate from the verification server 1 as shown in Figure 1 in this embodiment, it may be integrated as a part of the network server 3 or the verification server 1 in other embodiments. Moreover, this invention is not limited to downloading of the terminal program 411 from the network; for example, the program medium 4 may be a compact disc or other data carrier storing the terminal program 411 in practice.

Subsequently, after the first user end 2a stores and installs the terminal program 411 in the storage device 22 as a terminal program 221, the first user end 2a is operable to execute the terminal program 221, in step S202, for scanning the hardware components of the first user end 2a to obtain the identification codes (A)-(D) of the hardware components, and for establishing a reference hardware list 10a according to the identification codes of the hardware components thus obtained after the first user 51 inputs the user ID. In step S203, the first user end 2a is operable to encrypt the reference hardware list 10a with a session key and to directly send the encrypted reference hardware list to the verification server 1 through the second communication channel 300b.

In practice, the terminal program 221 allows the first user 51 to decide whether the external peripheral device 251 is scanned in step S202. Further, when the external peripheral device 251 of the first user end 2a does not have a unique identification code, the control module 11 of the verification server 1 is operable to generate a device-assigned identification code, and the transmission module 13 is operable to transmit the device-assigned identification code to the first user end 2a for storage in the external peripheral device 251 so as to serve as the identification code of the external peripheral device 251.

After the transmission module 13 of the verification server 1 receives the encrypted reference hardware list from the first user end 2a, the control module 11 of the verification server 1 is operable, in step S102, to decrypt the encrypted reference hardware list so as to obtain the reference hardware list 10a, and to store the reference hardware list 10a in the database module 10 as hardware information associated with the first user end 2a. In particular, the reference hardware list 10a consists of the user ID associated with the first user 51, and the identification codes (A), (B), (C) and (D) of the hardware components (the motherboard 20, the central processing unit 21, the BIOS unit 24 and the external peripheral device 251) of the first user end 2a. Similarly, the database module 10 further stores the reference hardware lists 10b and 10c corresponding to the second and third user ends 2b and 2c, respectively.

The verification server 1 is further operable to send a notification to the network server 3 after storing the reference hardware list 10a. Then, in response to the notification from the verification server 1, the network server 3 is operable, in step S302, to affirm that the registration procedure associated with the first user 51 is completed. Finally, the network server 3 is operable, in step S303, to send the first user end 2a a notification that the registration procedure is completed, and the first user end 2a is operable to receive the notification in step S204.

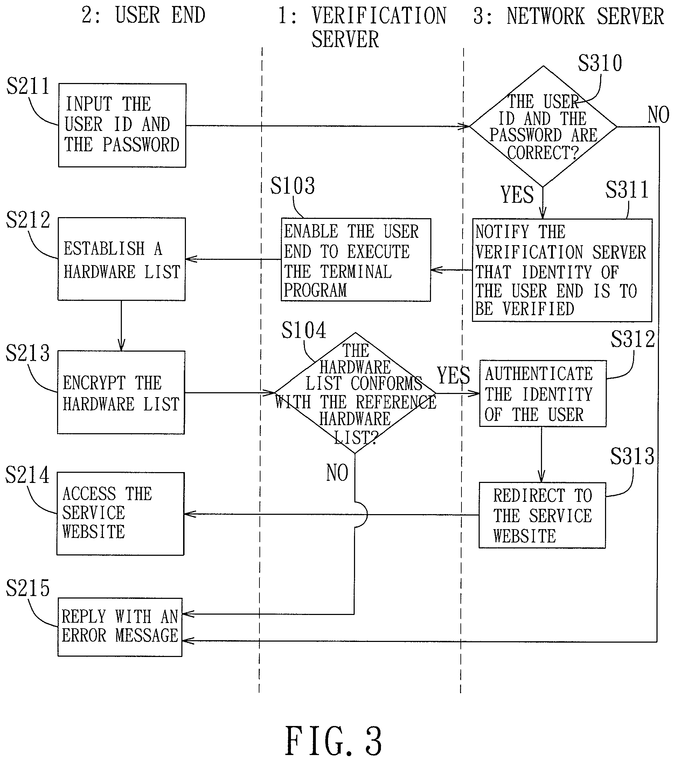

Referring to Figures 1 and 3, the verification server 1 cooperates with the first user end 2a and the network server 3 to implement a login procedure of the network authentication method according to the present invention. The login procedure of the network authentication method includes the following steps.

In step S211, the first user 51 inputs the user ID and the password using the input device 261 of the first user end 2a at the service website provided by the network server 3, and the first user end 2a is operable to transmit the user ID and the password to the network server 3 through the first communication channel 300a. In step S310, the network server 3 is operable to verify whether the user ID and the password thus received are correct. In particular, the network server 3 is operable to determine whether the user ID and the password inputted in step S211 conform with the user ID and the password provided in the above-mentioned registration procedure. In alternative embodiments, the verification server 1 can be configured to verify the user ID and the password associated with the first user 51 instead of the network server 3.

If it is determined that either the user ID or the password is incorrect in step S310, the network server 3 is operable to send an error message to the first user end 2a for displaying on the display device 262 of the first user end 2a in step S215. If it is determined that both of the user ID and the password are correct in step S310, the network server 3 is operable to notify the verification server 1 that identity of the first user end 2a associated with the first user 51 is to be verified in step S311. The network server 3 is further operable to redirect the first user end 2a for connecting with the verification server 1 through the second communication channel 300b.

In step S103, the verification server 1 is operable to enable the first user end 2a to execute the terminal program 221 stored in the storage device 22 of the first user end 2a. In step S212, the first user end 2a is operable to execute the terminal program 221 for scanning the hardware components thereof to obtain the identification codes of the hardware components of the first user end 2a, and for establishing a hardware list according to the identification codes of the hardware components thus obtained. Then, in step S213, the first user end 2a is operable to encrypt the hardware list with the session key, and to send the encrypted hardware list as verification data for verifying identity of the first user end 2a to the verification server 1 through the second communication channel 300b.

In step S104, the control module 11 of the verification server 1 is operable to decrypt the verification data from the first user end 2a to obtain the hardware list. Then, the verification module 12 of the verification server 1 is operable to compare the hardware list thus obtained with the reference hardware list 10a stored in the database module 10 for verifying the identity of the first user 51 associated with the first user end 2a.

When the hardware list obtained in step S104 does not conform with the reference hardware list 10a stored in the database module 10, the verification module 12 is operable to determine that the verification of the first user 51 is unsuccessful and to send the error message to the first user end 2a. Accordingly, the first user end 2a is denied access to the service website provided by the network server 3, and is operable to display the error message on the display device 262 in step S215. On the other hand, when the hardware list conforms with the reference hardware list 10a, the verification module 12 is operable to determine that the verification of the first user 51 is successful, and to notify the network server 3 of the result of the verification made thereby. Thus, the network server 3 is operable to authenticate the identity of the first user 51 in step S312, and then, to redirect the first user end 2a associated with the first user 51 for connecting with the service website provided by the network server 3 in step S313. In step S214, the first user end 2a is authorized to access the service website.

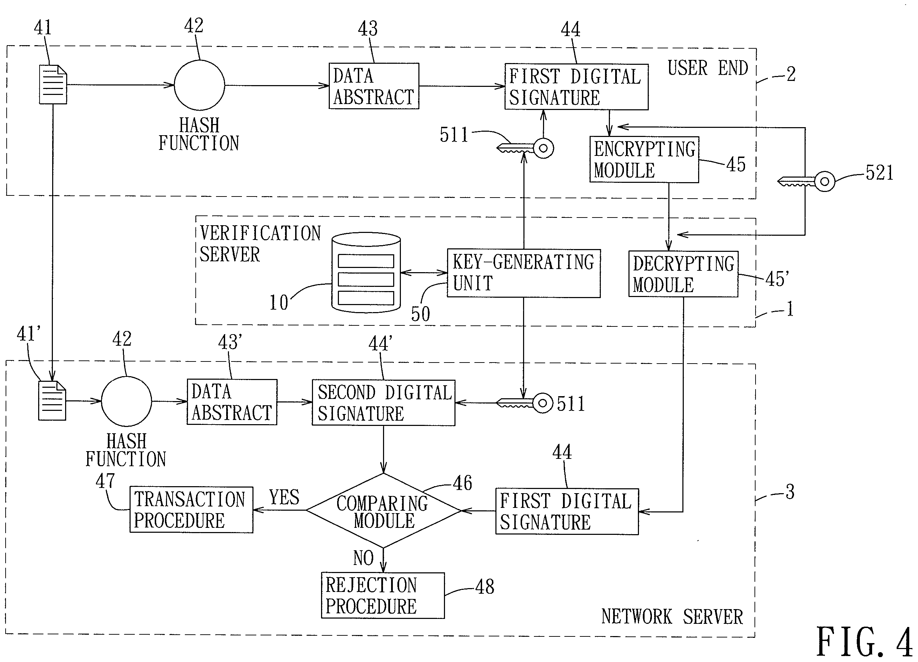

After the first user end 2a is authorized to access the service website in the login procedure, the verification server 1 cooperates with the first user end 2a and the network server 3 to further implement the network security authentication method for processing a digital signature when the first user 51 intends to conduct an electronic transaction with the network server 3. The network security authentication method for processing a digital signature will be described in detail below with reference to Figures 1 and 4.

The verification server 1 further includes a key-generating unit 50 and a decrypting module 45' , the terminal program 221 includes a hash function 42 and an encrypting module 45, and the network server 3 includes a comparing module 46. The key-generating unit 50 of the verification server 1 is operable to generate a key 511 according to the reference hardware list 10a stored in the database module 10. The key 511 is sent to the first user end 2a through the second communication channel 300b in the communication network 300, and is sent to the network server 3 through the special channel 301 (302).

When the first user 51 intends to conduct an electronic transaction with the network server 3 using the first user end 2a, the first user end 2a is operable to generate transaction data 41 related to the electronic transaction and to send the transaction data 41 to the network server 3 through the first communication channel 300a in the communication network 300. The terminal program 221 of the first user end 2a uses the hash function 42 to draw out a data abstract 43 from the transaction data 41, and processes the data abstract 43 into a first digital signature 44 using the key 511 sent by the verification server 1. Then, the encrypting module 45 is operable to encrypt the first digital signature 44 with a session key 521, and the encrypted first digital signature is sent to the verification server 1 through the second communication channel 300b. The decrypting module 45' of the verification server 1 is operable to decrypt the encrypted first digital signature to obtain the first digital signature 44, and then, the first digital signature 44 is sent to the network server 3.

After the network server 3 receives the key 511 from the verification server 1 and the transaction data 41' from the first user end 2a, the network server 3 is operable to draw out a data abstract 43' from the transaction data 41' using the hash function 42. Then, the network server 3 is operable to process the data abstract 43' into a second digital signature 44' using the key 511 sent by the verification server 1. The comparing module 46 of the network server 3 is operable to compare the second digital signature 44' with the first digital signature 44 generated by the first user end 2a. When the second digital signature 44' conforms with the first digital signature 44, the network server 3 is operable to determine that the transaction data 41 was not tampered during transmission from the first user end 2a to the network server 3 as the transaction data 41' through the first communication channel 300a. Subsequently, the network server 3 is operable to implement a transaction procedure 47 for completing the electronic transaction according to the transaction data 41'. On the other hand, when the second digital signature 44' does not conform with the first digital signature 44, the network server 3 is operable to determine that the transaction data 41' was tampered during transmission from the first user end 2a to the network server so that the data abstract 43' from the tampered transaction data 41' is not identical to the data abstract 43 from the original transaction data 41. Thus, the network server 3 is operable to implement a rejection procedure 48 for rejecting the electronic transaction.

In alternative embodiments, the comparing module 46 of the network server 3 can be omitted, and the network server 3 is operable to send the second digital signature 44' to the verification server 1. Then, the verification server 1 is configured to compare the second digital signature 44' with the first digital signature 44 instead of the comparing module 46, and to send the comparing result to the network server 3. In response to the comparing result from the verification server 1, the network server 3 is operable to alternatively implement the transaction procedure 47 and the rejection procedure 48.

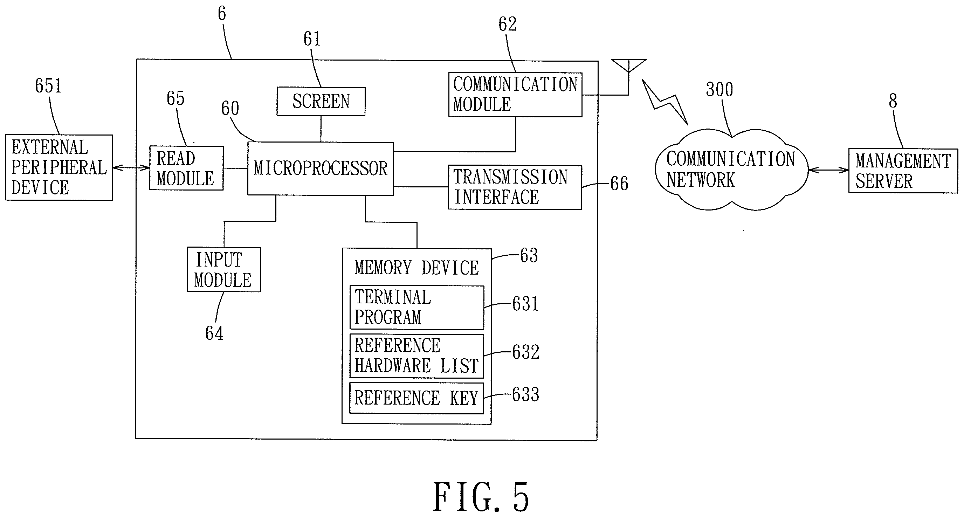

Referring to Figure 5, the second preferred embodiment of a network authentication device according to the present invention is a management server 8 that integrates the functions of the verification server 1 and the network server 3 of the first preferred embodiment. In this embodiment, the user end is a portable electronic device 6, such as a smart phone.

The portable electronic device 6 includes a microprocessor 60, a screen 61, a communication module 62, a transmission interface 66, a memory device 63, an input module 64, and a read module 65. The communication module 62 is operable to communicate with the management server 8 through a communication network 300. The memory device 63 stores a terminal program 631, a reference hardware list 632, and a reference key 633 made from the reference hardware list 632. For instance, the read module 65 is a memory card reader, and an external peripheral device 651 connected thereto is a memory card. The reference hardware list 632 is associated with a combination of the identification codes of the microprocessor 60, the screen 61, the communication module 62, the transmission interface 66, the memory device 63, the input module 64, and/or the external peripheral device 651. While the terminal program 631 is similar to the terminal program 221 in the first preferred embodiment, it is required to input a correct personal identification number (PIN) for executing the terminal program 631 in this embodiment. In other embodiments, the user associated with the portable electronic device 6 only needs to input the PIN upon turning on the portable electronic device 6, and doest not need to input the PIN or a new PIN again for executing the terminal program 631.

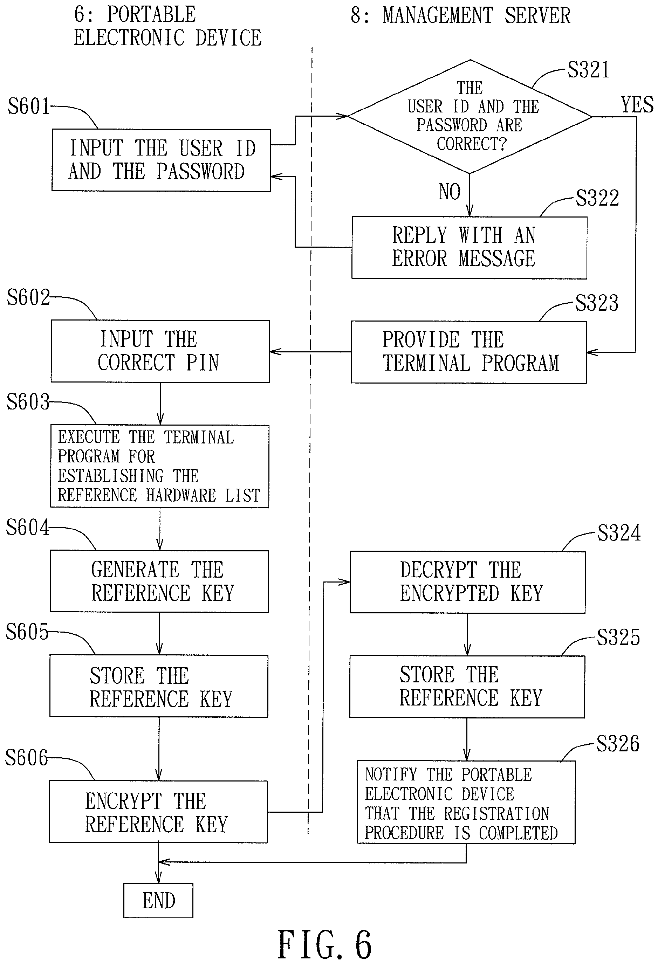

Referring to Figures 5 and 6, the management server 8 is operable to cooperate with the portable electronic device 6 to implement a registration procedure of the network authentication method according to the present invention. The registration procedure of the network authentication method includes the following steps.

In step S601, after the portable electronic device 6 is connected to the management server 8 using the communication module 62 through the communication network 300, a user associated with the portable electronic device 6 uses the input module 64 of the portable electronic device 6 to input a user identification (ID) and a password at a website provided by the management server 8. In response to receipt of the user ID and the password, the management server 8 is operable to check whether the user ID and the password are correct in step S321. If either the user ID or the password is incorrect, the management server 8 is operable to reply with an error message to the portable electronic device 6 in step S322. On the other hand, if both the user ID and the password are correct, the management server 8 is operable to provide the terminal program 631 to the portable electronic device 6 in step S323.

When the user of the portable electronic device 6 inputs the correct PIN in step S602, the portable electronic device 6 is operable, in step S603, to execute the terminal program 631 for scanning hardware components of the portable electronic device 6 to obtain identification codes of the hardware components, and for establishing and storing the reference hardware list 632. Then, the portable electronic device 6 executes the terminal program 631 for generating the reference key 633 based on the reference hardware list 632 in step S604, and is operable to store the reference key 633 in the memory device 63 in step S605. In step S606, the portable electronic device 6 is operable to encrypt the reference key 633 with a session key so as to obtain an encrypted key, and to send the encrypted key to the management server 8. In other embodiments, step S602 may be omitted since the user already inputted the PIN upon turning on the portable electronic device 6.

After receiving the encrypted key from the portable electronic device 6, the management server 8 is operable to decrypt the encrypted key so as to obtain the reference key 633 in step S324, and to store the reference key in step S325. Finally, in step S326, the management server 8 is operable to notify the portable electronic device 6 that the registration procedure is completed.

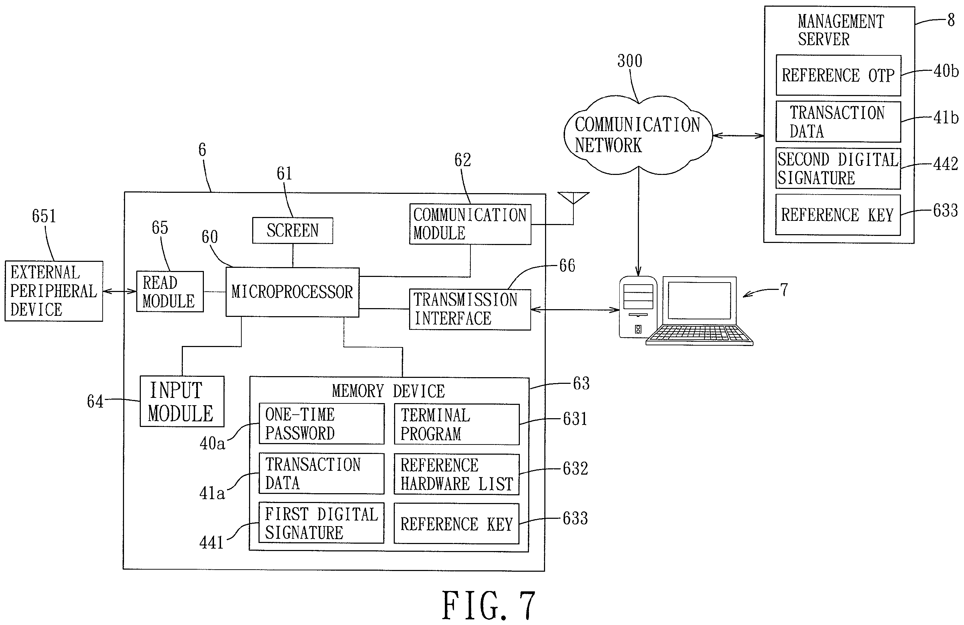

Referring to Figure 7, the portable electronic device 6 is connected to a computer 7 through the transmission interface 66 that may be either a cable transmission interface or a wireless transmission interface. The input module 64 of the portable electronic device 6 is a key panel or a touch panel for generating electronic data in responses to an input from the user of the portable electronic device 6. The electronic data is transmitted to the computer 7 through the transmission interface 66, and is subsequently sent to the management server 8 through the communication network 300. In the case of the portable electronic device 6 without the transmission interface 66, the user can use a keyboard of the computer 7 to input the electronic data displayed on the screen 61 of the portable electronic device 6 so as to transmit the electronic data to the management server 8.

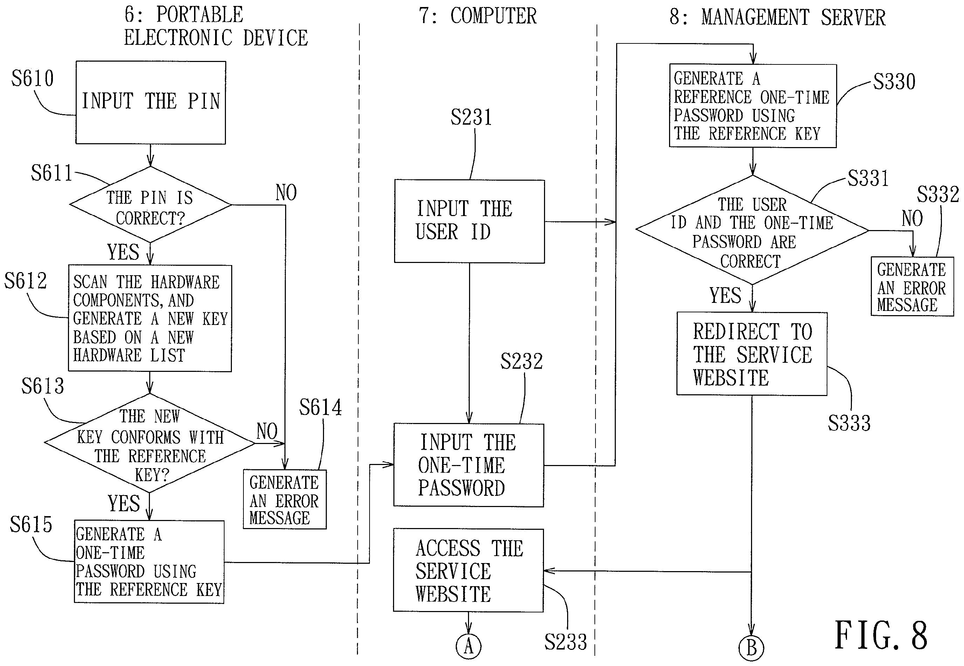

Referring to Figures 7 and 8, the management server 8 is operable to cooperate with the portable electronic device 6 and the computer 7 to implement a login procedure of the network authentication method according to the present invention. The login procedure of the network authentication method includes the following steps.

First, the user of the portable electronic device 6 needs to input the PIN in step S610. Then, in step S611, the portable electronic device 6 is operable to determine whether the PIN inputted in step S610 is correct. If it is determined that the PIN is incorrect, the portable electronic device 6 is operable to generate an error message in step S614. If the PIN inputted in step S610 is correct, the portable electronic device 6 is operable, in step S612, to execute the terminal program 631 for scanning the hardware components of the portable electronic device 6 to obtain identification codes of the hardware components, for establishing a new hardware list according to the identification codes thus obtained, and for generating a new key based on the new hardware list 632 thus established. In other embodiments, step S610 and S611 may be omitted, and the portable electronic device 6 is operable to directly implement step S612 when the user wants to use the portable electronic device 6 for accessing the service website provided by the management server 8.

Then, in step S613, the portable electronic device 6 is operable to execute the terminal program 631 for comparing the new key generated in step S612 with the reference key 633 stored in the memory device 63. When the new key does not conform with the reference key 633, it can be determined that the new key was tampered or that the terminal program 631 and the reference key 633 were moved to another device, and the flow goes to step S614. When the new key conforms with the reference key 633, it can be determined that the new key and the reference key 633 were generated using the same device and that the terminal program 631 and the reference key 633 were not moved to another device, and the portable electronic device 6 is operable to execute the terminal program 631 for further generating a one-time password (OTP) 40a using the reference key 633 in step S615. Then, the OTP 40a is transmitted to the computer 7 through the transmission interface 66 of the portable electronic device 6. In the case of the portable electronic device 6 without the transmission interface 66, the user can use the keyboard of the computer 7 to input the OTP 40a displayed on the screen 61 of the portable electronic device 6 in step S232.

In order to login the service website provided by the management server 8, the user needs to input the user ID using the keyboard of the computer 7 in step S231, and then, the user ID and the OTP 40a are sent to the management server 8 through the communication network 300.

In step S330, the management server 8 is operable to generate a reference one-time password 40b using the reference key 633 stored therein in step S325 of the registration procedure. Upon receiving the user ID and the OTP 40a from the computer 7, the management server 8 is operable to compare the OTP 40a with the reference OTP 40b and to determine whether the user ID is correct in step S331. If the OTP 40a does not conform with the reference OTP 40b or the user ID is incorrect, the management server 8 is operable to generate an error message in step S332. If the OTP 40a conforms with the reference OTP 40b and the user ID is correct, the management server 8 is operable to redirect the computer 7 for connecting with the service website provided by the management server 8 in step S333. In step S233, the computer 7 is authorized to access the service website.

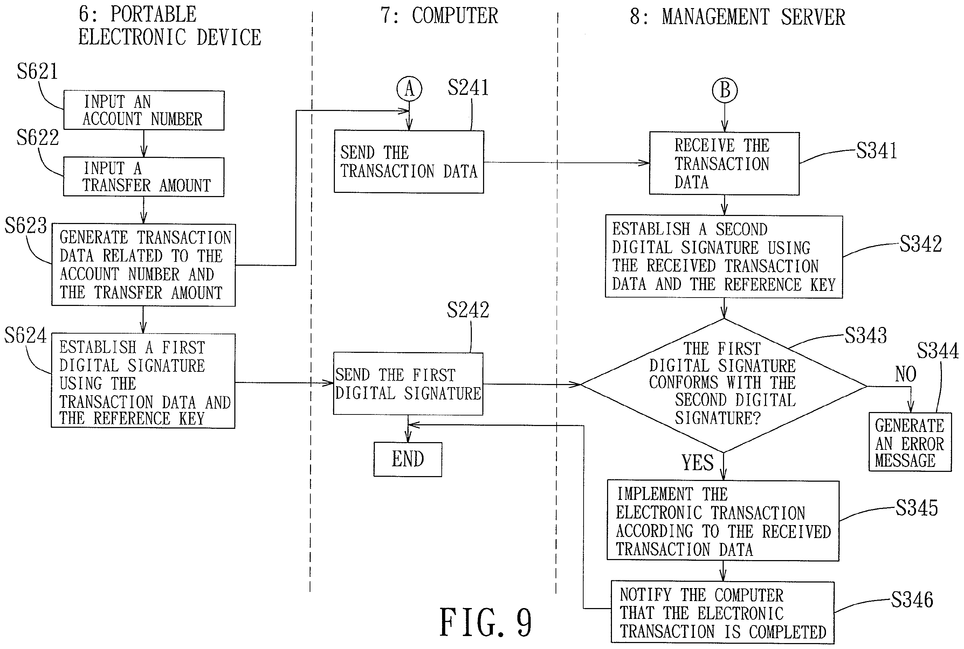

After the computer 7 has received authorization to access the service website in the login procedure, the management server 8 cooperates with the portable electronic device 6 and the computer 7 to further implement the network security authentication method for processing a digital signature when the user intends to conduct an electronic transaction with the management server 8. The network security authentication method for processing a digital signature will be described in detail below with reference to Figures 7 and 9.

For conducting the electronic transaction with the management server 8, the user needs to input a receiving account number in step S621 and to input a transfer amount in step S622 using the input module 64 of the portable electronic device 6. In step S623, the portable electronic device 6 is operable to generate transaction data 41a related to the account number and the transfer amount, and to send the transaction data 41a to the computer 7 through the transmission interface 66. Further, in step S624, the portable electronic device 6 is operable to execute the terminal program 631 for establishing a first digital signature 441 using the transaction data 41a and the reference key 633, and to send the first digital signature 441 to the computer 7 through the transmission interface 66.

In response to receipt of the transaction data 41a and the first digital signature 441, the computer 7 is operable to send the transaction data 41a and the first digital signature 441 to the management server 8 through the communication network 300 in steps S241 and S242, respectively. It should be noted that, in the case of the portable electronic device 6 without the transmission interface 66, the user may use the keyboard of the computer 7 to input the account number and the transfer amount so that the computer 7 is operable to obtain the transaction data 41a consisting of the account number and the transfer amount.

The management server 8 is operable to receive transaction data 41b corresponding to the transaction data 41a from the computer 7 through the communication network 300 in step S341, and then, to establish a second digital signature 442 using the received transaction data 41b and the reference key 633 in step S342. In step S343, the management server 8 is operable to receive the first digital signature 441, and to compare the first digital signature 441 with the second digital signature 442. If the first digital signature 441 does not conform with the second digital signature 442, the management server 8 is operable to determine that the transaction data 41a was tampered during transmission and that the received transaction data 41b is different from the transaction data 41a. Therefore, the management server 8 is operable to reject the electronic transaction and to generate an error message in step S344. If the first digital signature 441 conforms with the second digital signature 442, the management server 8 is operable to determine that the received transaction data 41b is correct and is identical to the transaction data 41a. Accordingly, the management server 8 is operable to implement the electronic transaction according to the account number and the transfer amount of the received transaction data 41b in step S345. Finally, in step S346, the management server 8 is operable to notify the computer 7 that the electronic transaction is completed.

In sum, the network authentication method implemented using the network authentication device according to this invention has the following advantages . First, the user end may execute the terminal program for scanning the hardware components of the user end and for establishing the hardware list according to the identification codes of the hardware components thus obtained for subsequent use in authenticating the user. Thus, a network content provider does not need to purchase additional equipment for authentication, and does not need to provide the user with a personalized token, integrated circuit card, USB flash drive, etc.. Also, the user does not need to have additional authentication devices for different websites. Further, in the first preferred embodiment, since the user end is connected to the network server through the first communication channel and is connected to the verification server through the second communication channel that is separate from the first communication channel, it is relatively difficult to attack the first and second communication channels simultaneously for stealing and tampering the data sent by the user end.

## Claims

1. A network authentication method to be implemented using a network server (3), a network authentication device (1) and a user device (2) for authenticating the user device (2), the user device (2) storing a terminal program (221) and including a plurality of hardware components each of which has a unique identification code, said network authentication method being **characterized by** the following steps of:
a) configuring the network authentication device (1) to store hardware information (10a-10c) associated with the identification codes of the hardware components of the user device (2);
b) when it is intended to verify identity of the user device (2) in response to a login request from the user device (2) for accessing the network server (3) through a first communication channel (300a), configuring the network server (3) to redirect the user device (2) for connecting with the network authentication device (1) through a second communication channel (300b) that is separate from said first communication channel (300a), and configuring the user device (2) to execute the terminal program (221) for scanning the hardware components thereof to obtain the identification codes of the hardware components of the user device (2), for establishing a hardware list according to the identification codes of the hardware components thus obtained, and for sending to the network authentication device (1) verification data that is associated with the hardware list;
c) configuring the network authentication device (1) to verify identity of the user device (2) based on relationship between the verification data received from the user device (2) in step b) and the hardware information (10a-10c) stored in step a);
d) configuring the network authentication device (1) to generate a key (511) according to the hardware information (10a-10c) stored therein, and to send the key (511) to the user device (2) and the network server (3);
e) when the user device (2) intends to conduct an electronic transaction with the network server (3), configuring the user device (2) to generate a first digital signature (44) corresponding to transaction data (41) of the electronic transaction using the key (511) sent by the network authentication device (1) and to send the transaction data (41) and the first digital signature (44) to the network server (3), and configuring the network server (3) to generate a second digital signature (44') corresponding to the transaction data (41') received from the user device (2) using the key (511) sent by the network authentication device (1); and
f) configuring the network server (3) to compare the first digital signature (44) from the user device (2) with the second digital signature (44') generated thereby, and to determine that the transaction data (41') was not tampered during transmission from the user device (2) to the network server (3) when the first digital signature (44) conforms with the second digital signature (44').

2. The network authentication method as claimed in Claim 1, further **characterized by** the steps, prior to step a), of:
i) configuring the user device (2) to download the terminal program (221) from a specified website (4); and
ii) configuring the user device (2) to execute the terminal program (221) for scanning the hardware components thereof to obtain the identification codes of the hardware components, for establishing a reference hardware list (10a-10c) serving as the hardware information according to the identification codes thus obtained, and for sending the hardware information to the network authentication device for storage in step a) .

3. The network authentication method as claimed in Claim 2, further **characterized in that**:
in step i), the user device (2) is configured to download the terminal program (221) from the specified website (4) during registration of the user device (2) at a network server (3);
said network authentication method further comprising, between steps a) and b), the step of configuring the network authentication device (1) to notify the network server (3) that the hardware information of the user device (2) has been stored in the network authentication device (1).

4. The network authentication method as claimed in Claim 1, further **characterized in that**:
in step b), the network server (3) is further configured to notify the network authentication device (1) that identity of the user device (2) is to be verified; and
in step c), the network authentication device (1) is configured to notify the network server (3) of result of verification made thereby.

5. The network authentication method as claimed in any one of Claims 1 to 4, further **characterized in that**:
in step b), the verification data sent to the network authentication device (1) is obtained by encrypting the hardware list with a session key; and
in step c), the network authentication device (1) is configured to decrypt the verification data to obtain the hardware list, and to compare the hardware list with the hardware information (10a-10c) stored therein for verifying the identity of the user device (2).

6. A network authentication method to be implemented using a network authentication device (8) and a portable electronic device (6) for authenticating the portable electronic device (6), the portable electronic device (6) storing a terminal program (631) and including a plurality of hardware components each of which has a unique identification code, said network authentication method being **characterized by** the following steps of:
a) configuring the network authentication device (8) to store hardware information (633) associated with the identification codes of the hardware components of the portable electronic device (6), wherein step a) includes the sub-steps of
a1) configuring the portable electronic device (6) to execute the terminal program (631) for scanning the hardware components thereof to obtain the identification codes of the hardware components, and for generating and storing a reference key (633) using the identification codes thus obtained,
a2) configuring the portable electronic device (6) to encrypt the reference key (633) with a session key so as to obtain an encrypted key and to send the encrypted key to the network authentication device (8), and
a3) configuring the network authentication device (8) to decrypt the encrypted key received from the portable electronic device (6) so as to obtain the reference key (633), said reference key being the hardware information (633) to be stored in the network authentication device (8);
b) when it is intended to verify identity of the portable electronic device (6), configuring the portable electronic device (6) to execute the terminal program (631) for scanning the hardware components thereof to obtain the identification codes of the hardware components of the user end, for establishing a new hardware list according to the identification codes of the hardware components thus obtained, and for sending to the network authentication device (8) verification data that is generated using the reference key;
c) configuring the network authentication device (8) to verify identity of the portable electronic device (6) based on relationship between the verification data received from the portable electronic device (6) in step b) and the hardware information (633) stored in step a) ;
d') when the portable electronic device (6) intends to conduct an electronic transaction with the network authentication device (8), configuring the portable electronic device (6) to generate a first digital signature (441) corresponding to transaction data (41a) of the electronic transaction using the reference key (633) and to send the transaction data (41a) and the first digital signature (441) to the network authentication device (8), and configuring the network authentication device (8) to generate a second digital signature (442) corresponding to the transaction data (41b) received from the portable electronic device (6) using the hardware information (633) stored therein; and
e') configuring the network authentication device (8) to compare the first digital signature (441) from the portable electronic device (6) with the second digital signature (442) generated thereby, and to determine that the transaction data (41b) was not tampered during transmission from the portable electronic device (6) to the network authentication device (8) when the first digital signature (441) conforms with the second digital signature (442).

7. The network authentication method as claimed in Claim 6, further **characterized in that**:
in step b), the verification data sent to the network authentication device (8) is a one-time password (40a) obtained using the reference key (633) generated in sub-step a1); and
in step c), the network authentication device (8) is configured to generate a reference one-time password (40b) using the hardware information stored therein, and to compare the verification data (40a) with the reference one-time password (40b) for verifying the identity of the portable electronic device (6).

8. The network authentication method as claimed in any one of Claims 6 and 7, further **characterized in that**, in step b), the portable electronic device (6) is configured to execute the terminal program (631) for generating a new reference key using the identification codes of the hardware components, for comparing the new reference key with the reference key (633) generated in sub-step a1), and for generating the verification data (40a) when the new reference key conforms with the reference key (633).

9. The network authentication method as claimed in Claim 1, further **characterized in that** the hardware information (10a-10c) stored in the network authentication device (1) in step a) and the verification data sent to the network authentication device (1) in step b) are associated with the identification codes of at least one of the following hardware components of the user device (2): a central processing unit (21) ; a basic input/output system (BIOS) unit (24) ; a storage device (22); a network interface (23); a motherboard (20); and an external peripheral device (251).

## Patentansprüche

1. Ein Netzwerkauthentisierungsverfahren, das unter Verwendung eines Netzwerkservers (3), einer Netzwerkauthentisierungsvorrichtung (1) und einer Nutzervorrichtung (2) zum Authentisieren der Nutzervorrichtung (2) implementiert werden soll, wobei die Nutzervorrichtung (2) ein Terminalprogramm (221) speichert und eine Mehrzahl von Hardwarekomponenten umfasst, von denen jede einen eindeutigen Identifizierungscode aufweist, wobei das Netzwerkauthentisierungsverfahren durch folgende Schritte gekennzeichnet ist:
a) Konfigurieren der Netzwerkauthentisierungsvorrichtung (1) dazu, Hardwareinformationen (10a-10c) zu speichern, die den Identifizierungscodes der Hardwarekomponenten der Nutzervorrichtung (2) zugeordnet sind;
b) wenn beabsichtigt ist, ansprechend auf eine Login-Anforderung von der Nutzervorrichtung (2) zum Zugreifen auf den Netzwerkserver (3) durch einen ersten Kommunikationskanal (300a) die Identität der Nutzervorrichtung (2) zu überprüfen, Konfigurieren des Netzwerkservers (3) dahin gehend, die Nutzervorrichtung (2) umzuleiten, zum Verbinden durch einen zweiten Kommunikationskanal (300b), der von dem ersten Kommunikationskanal (300a) getrennt ist, und Konfigurieren der Nutzervorrichtung (2) dahin gehend, das Terminalprogramm (221) auszuführen, zum Abtasten der Hardwarekomponenten derselben, um die Identifizierungscodes der Hardwarekomponenten der Nutzervorrichtung (2) zu erhalten, zum Erstellen einer Hardwareliste gemäß den somit erhaltenen Identifizierungscodes der Hardwarekomponenten, und zum Senden von Überprüfungsdaten, die der Hardwareliste zugeordnet sind, an die Netzwerkauthentisierungsvorrichtung (1);
c) Konfigurieren der Netzwerkauthentisierungsvorrichtung (1) dazu, eine Identität der Nutzervorrichtung (2) auf der Basis einer Beziehung zwischen den bei Schritt b) von der Nutzervorrichtung (2) empfangenen Überprüfungsdaten und den bei Schritt a) gespeicherten Hardwareinformationen (10a-10c) zu überprüfen;
d) Konfigurieren der Netzwerkauthentisierungsvorrichtung (1) dahin gehend, gemäß den darin gespeicherten Hardwareinformationen (10a-10c) einen Schlüssel (511) zu erzeugen und den Schlüssel (511) an die Nutzervorrichtung (2) und den Netzwerkserver (3) zu senden;
e) wenn die Nutzervorrichtung (2) beabsichtigt, eine elektronische Transaktion mit dem Netzwerkserver (3) durchzuführen, Konfigurieren der Nutzervorrichtung (2) dahin gehend, eine erste digitale Signatur (44), die Transaktionsdaten (41) der elektronischen Transaktion entspricht, unter Verwendung des durch die Netzwerkauthentisierungsvorrichtung (1) gesendeten Schlüssels (511) zu erzeugen und die Transaktionsdaten (41) und die erste digitale Signatur (44) an den Netzwerkserver (3) zu senden, und Konfigurieren des Netzwerkservers (3) dahin gehend, eine zweite digitale Signatur (44'), die den von der Nutzervorrichtung (2) empfangenen Transaktionsdaten (41') entspricht, unter Verwendung des durch die Netzwerkauthentisierungsvorrichtung (1) gesendeten Schlüssels (511) zu erzeugen; und
f) Konfigurieren des Netzwerkservers (3) dahin gehend, die erste digitale Signatur (44) von der Nutzervorrichtung (2) mit der durch dieselbe erzeugten zweiten digitalen Signatur (44') zu vergleichen und zu bestimmen, dass die Transaktionsdaten (41') während des Sendens von der Nutzervorrichtung (2) an den Netzwerkserver (3) nicht manipuliert wurden, wenn die erste digitale Signatur (44) mit der zweiten digitalen Signatur (44') übereinstimmt.

2. Das Netzwerkauthentisierungsverfahren gemäß Anspruch 1, das vor dem Schritt a) durch die folgenden Schritte gekennzeichnet ist:
i) Konfigurieren der Nutzervorrichtung (2) dahin gehend, das Terminalprogramm (221) von einer festgelegten Website (4) herunterzuladen; und
ii) Konfigurieren der Nutzervorrichtung (2) dahin gehend, das Terminalprogramm (221) auszuführen zum Abtasten der Hardwarekomponenten derselben, um die Identifikationscodes der Hardwarekomponenten zu erhalten, zum Erstellen einer Referenzhardwareliste (10a-10c), die als Hardwareinformationen dient, gemäß den somit erhaltenen Identifikationscodes, und zum Senden der Hardwareinformationen an die Netzwerkauthentisierungsvorrichtung zur Speicherung bei Schritt a).

3. Das Netzwerkauthentisierungsverfahren gemäß Anspruch 2, das ferner **dadurch gekennzeichnet ist, dass**:
bei Schritt i) die Nutzervorrichtung (2) dazu konfiguriert ist, das Terminalprogramm (221) während einer Registrierung der Nutzervorrichtung (2) bei einem Netzwerkserver (3) von der festgelegten Website (4) herunterzuladen;
wobei das Netzwerkauthentisierungsverfahren zwischen den Schritten a) und b) ferner den Schritt des Konfigurierens der Netzwerkauthentisierungsvorrichtung (1) dahin gehend aufweist, den Netzwerkserver (3) davon zu benachrichtigen, dass die Hardwareinformationen der Nutzervorrichtung (2) in der Netzwerkauthentisierungsvorrichtung (1) gespeichert wurden.

4. Das Netzwerkauthentisierungsverfahren gemäß Anspruch 1, das ferner **dadurch gekennzeichnet ist, dass**:
bei Schritt b) der Netzwerkserver (3) ferner dazu konfiguriert ist, die Netzwerkauthentisierungsvorrichtung (1) zu benachrichtigen, dass die Identität der Nutzervorrichtung (2) überprüft werden soll; und
die Netzwerkauthentisierungsvorrichtung (1) bei Schritt c) dazu konfiguriert wird, dem Netzwerkserver (3) das Ergebnis der durch dieselbe durchgeführten Überprüfung mitzuteilen.

5. Das Netzwerkauthentisierungsverfahren gemäß einem der Ansprüche 1 bis 4, das ferner **dadurch gekennzeichnet ist, dass**:
bei Schritt b) die an die Netzwerkauthentisierungsvorrichtung (1) gesendeten Überprüfungsdaten erhalten werden, indem die Hardwarelist mit einem Sitzungsschlüssel verschlüsselt wird; und
bei Schritt c) die Netzwerkauthentisierungsvorrichtung (1) dazu konfiguriert ist, die Überprüfungsdaten zu entschlüsseln, um die Hardwareliste zu erhalten, und dazu, die Hardwareliste mit den darin gespeicherten Hardwareinformationen (10a-10c) zu vergleichen, um die Identität der Nutzungsvorrichtung (2) zu überprüfen.

6. Ein Netzwerkauthentisierungsverfahren, das unter Verwendung einer Netzwerkauthentisierungsvorrichtung (8) und einer tragbaren elektronischen Vorrichtung (6) zum Authentisieren der tragbaren elektronischen Vorrichtung (6) implementiert werden soll, wobei die tragbare elektronische Vorrichtung (6) ein Terminalprogramm (631) speichert und eine Mehrzahl von Hardwarekomponenten umfasst, von denen jede einen eindeutigen Identifizierungscode aufweist, wobei das Netzwerkauthentisierungsverfahren durch folgende Schritte gekennzeichnet ist:
a) Konfigurieren der Netzwerkauthentisierungsvorrichtung (8) dazu, Hardwareinformationen (633) zu speichern, die den Identifizierungscodes der Hardwarekomponenten der tragbaren elektronischen Vorrichtung (6) zugeordnet sind; wobei Schritt a) folgende Teilschritte umfasst:
a1) Konfigurieren der tragbaren elektronischen Vorrichtung (6) dahin gehend, das Terminalprogramm (631) auszuführen, zum Abtasten der Hardwarekomponenten derselben, um die Identifizierungscodes der Hardwarekomponenten zu erhalten, und zum Erzeugen und Speichern eines Referenzschlüssels (633) unter Verwendung der somit erhaltenen Identifizierungscodes,
a2) Konfigurieren der tragbaren elektronischen Vorrichtung (6) dahin gehend, den Referenzschlüssel (633) mit einem Sitzungsschlüssel zu verschlüsseln, um einen verschlüsselten Schlüssel zu erhalten, und den verschlüsselten Schlüssel an die Netzwerkauthentisierungsvorrichtung (8) zu senden, und
a3) Konfigurieren der Netzwerkauthentisierungsvorrichtung (8) dahin gehend, den von der tragbaren elektronischen Vorrichtung (6) empfangenen verschlüsselten Schlüssel zu entschlüsseln, um den Referenzschlüssel (633) zu erhalten, wobei der Referenzschlüssel die Hardwareinformationen (633) ist, die in der Netzwerkauthentisierungsvorrichtung (8) gespeichert werden sollen;
b) wenn beabsichtigt ist, die Identität der tragbaren elektronischen Vorrichtung (6) zu überprüfen, Konfigurieren der tragbaren elektronischen Vorrichtung (6) dahin gehend, das Terminalprogramm (631) auszuführen, zum Abtasten der Hardwarekomponenten derselben, um die Identifizierungscodes der Hardwarekomponenten der Nutzerseite zu erhalten, zum Erstellen einer neuen Hardwareliste gemäß den somit erhaltenen Identifizierungscodes der Hardwarekomponenten, und zum Senden von Überprüfungsdaten, die unter Verwendung des Referenzschlüssels erzeugt wurden, an die Netzwerkauthentisierungsvorrichtung (8);
c) Konfigurieren der Netzwerkauthentisierungsvorrichtung (8) dazu, eine Identität der tragbaren elektronischen Vorrichtung (6) auf der Basis einer Beziehung zwischen den bei Schritt b) von der tragbaren elektronischen Vorrichtung (6) empfangenen Überprüfungsdaten und den bei Schritt a) gespeicherten Hardwareinformationen (633) zu überprüfen;
d') wenn die tragbare elektronische Vorrichtung (6) beabsichtigt, eine elektronische Transaktion mit der Netzwerkauthentisierungsvorrichtung (8) durchzuführen, Konfigurieren der tragbaren elektronischen Vorrichtung (6) dahin gehend, eine erste digitale Signatur (441), die Transaktionsdaten (41a) der elektronischen Transaktion entspricht, unter Verwendung des Referenzschlüssels (633) zu erzeugen und die Transaktionsdaten (41a) und die erste digitale Signatur (441) an die Netzwerkauthentisierungsvorrichtung (8) zu senden, und Konfigurieren der Netzwerkauthentisierungsvorrichtung (8) dahin gehend, eine zweite digitale Signatur (442), die den von der tragbaren elektronischen Vorrichtung (6) empfangenen Transaktionsdaten (41b) entspricht, unter Verwendung der darin gespeicherten Hardwareinformationen (633) zu erzeugen; und
e') Konfigurieren der Netzwerkauthentisierungsvorrichtung (8) dahin gehend, die erste digitale Signatur (441) von der tragbaren elektronischen Vorrichtung (6) mit der durch dieselbe erzeugten zweiten digitalen Signatur (442) zu vergleichen und zu bestimmen, dass die Transaktionsdaten (41b) während des Sendens von der tragbaren elektronischen Vorrichtung (6) an die Netzwerkauthentisierungsvorrichtung (8) nicht manipuliert wurden, wenn die erste digitale Signatur (441) mit der zweiten digitalen Signatur (442) übereinstimmt.

7. Das Netzwerkauthentisierungsverfahren gemäß Anspruch 6, das ferner **dadurch gekennzeichnet ist, dass**:
bei Schritt b) die an die Netzwerkauthentisierungsvorrichtung (8) gesendeten Überprüfungsdaten ein einmaliges Passwort (40a) sind, das unter Verwendung des im Teilschritt a1) erzeugten Referenzschlüssels (633) erhalten wird; und
bei Schritt c) die Netzwerkauthentisierungsvorrichtung (8) dazu konfiguriert ist, unter Verwendung der darin gespeicherten Hardwareinformationen ein einmaliges Referenzpasswort (40b) zu erzeugen und die Überprüfungsdaten (40a) mit dem einmaligen Referenzpasswort (40b) zu vergleichen, um die Identität der tragbaren elektronischen Vorrichtung (6) zu überprüfen.

8. Netzwerkauthentisierungsverfahren gemäß einem der Ansprüche 6 und 7, das ferner **dadurch gekennzeichnet ist, dass** bei Schritt b) die tragbare elektronische Vorrichtung (6) dazu konfiguriert ist, das Terminalprogramm (631) auszuführen, zum Erzeugen eines neuen Referenzschlüssels unter Verwendung der Identifikationscodes der Hardwarekomponenten, zum Vergleichen des neuen Referenzschlüssels mit dem im Teilschritt a1) erzeugten Referenzschlüssel (633) und zum Erzeugen der Überprüfungsdaten (40a), wenn der neue Referenzschlüssel mit dem Referenzschlüssel (633) übereinstimmt.

9. Das Netzwerkauthentisierungsverfahren gemäß Anspruch 1, das ferner **dadurch gekennzeichnet ist, dass** die bei Schritt a) in der Netzwerkauthentisierungsvorrichtung (1) gespeicherten Hardwareinformationen (10a-10c) und die bei Schritt b) an die Netzwerkauthentisierungsvorrichtung (1) gesendeten Überprüfungsdaten den Identifizierungscodes zumindest einer der folgenden Hardwarekomponenten der Nutzervorrichtung (2) zugeordnet werden: einer Zentralverarbeitungseinheit (21); einer Grundeingabe-/Ausgabe-System-Einheit (BIOS)-Einheit (24); einer Speichervorrichtung (22); einer Netzwerkschnittstelle (23); einer Grundplatine (20); und einer äußeren Peripherievorrichtung (251).

## Revendications

1. Procédé d'authentification de réseau à mettre en oeuvre à l'aide d'un serveur de réseau (3), d'un dispositif d'authentification de réseau (1) et d'un dispositif d'utilisateur (2) pour authentifier le dispositif d'utilisateur (2), le dispositif d'utilisateur (2) mémorisant un programme de terminal (221) et comportant une pluralité de composants de matériel présentant, chacun, un code d'identification unique, ledit procédé d'authentification de réseau étant **caractérisé par** les étapes suivantes consistant à:
a) configurer le dispositif d'authentification de réseau (1) pour mémoriser les informations de matériel (10a à 10c) associées aux codes d'identification des composants de matériel du dispositif d'utilisateur (2);
b) lorsqu'il est essayé de vérifier l'identité du dispositif d'utilisateur (2) en réponse à une demande de connexion du dispositif d'utilisateur (2) pour accéder au serveur de réseau (3) à travers un premier canal de communication (300a), configurer le serveur de réseau (3) pour rediriger le dispositif d'utilisateur (2) en vue d'une connexion avec le dispositif d'authentification de réseau (1) à travers un deuxième canal de communication (300b) qui est séparé dudit premier canal de communication (300a), et configurer le dispositif d'utilisateur (2) pour exécuter le programme de terminal (221) pour balayer les composants de matériel de celui-ci pour obtenir les codes d'identification des composants de matériel du dispositif d'utilisateur (2), pour établir une liste de matériel selon les codes d'identification des composants de matériel ainsi obtenus, et pour envoyer au dispositif d'authentification de réseau (1) les données de vérification qui sont associées à la liste de matériel;
c) configurer le dispositif d'authentification de réseau (1) pour vérifier l'identité du dispositif d'utilisateur (2) sur base du rapport entre les données de vérification reçues du dispositif d'utilisateur (2) à l'étape b) et les informations de matériel (10a à 10c) mémorisées à l'étape a);
d) configurer le dispositif d'authentification de réseau (1) pour générer une clé (511) selon les informations de matériel (10a à 10c) y mémorisées et pour envoyer la clé (511) au dispositif d'utilisateur (2) et au serveur de réseau (3);
e) lorsque le dispositif d'utilisateur (2) essaie d'effectuer une transaction électronique avec le serveur de réseau (3), configurer le dispositif d'utilisateur (2) pour générer une première signature numérique (44) correspondant aux données (41) de la transaction électronique à l'aide de la clé (511) envoyée par le dispositif d'authentification de réseau (1) et pour envoyer les données de transaction (41) et la première signature numérique (44) au serveur de réseau (3), et configurer le serveur de réseau (3) pour générer une deuxième signature numérique (44') correspondant aux données de transaction (41') reçues du dispositif d'utilisateur (2) à l'aide de la clé (511) envoyée par le dispositif d'authentification de réseau (1); et
f) configurer le serveur de réseau (3) pour comparer la première signature numérique (44) du dispositif d'utilisateur (2) avec la deuxième signature numérique (44') ainsi générée, et pour déterminer que les données de transaction (41') n'ont pas été altérées pendant la transmission du dispositif d'utilisateur (2) au serveur de réseau (3) lorsque la première signature numérique (44) est en conformité avec la deuxième signature numérique (44').

2. Procédé d'authentification de réseau selon la revendication 1, **caractérisé par** ailleurs par les étapes, avant l'étape a), consistant à:
i) configurer le dispositif d'utilisateur (2) pour télécharger le programme de terminal (221) d'un site Web spécifié (4); et
ii) configurer le dispositif d'utilisateur (2) pour exécuter le programme de terminal (221) pour balayer les composants de matériel de celui-ci pour obtenir les codes d'identification des composants de matériel, pour établir une liste de matériel de référence (10a à 10c) servant d'informations de matériel selon les codes d'identification ainsi obtenus, et pour envoyer les informations de matériel au dispositif d'authentification de réseau pour mémorisation à l'étape a).

3. Procédé d'authentification de réseau selon la revendication 2, **caractérisé par** ailleurs par le fait que:
à l'étape i), le dispositif d'utilisateur (2) est configuré pour télécharger le programme de terminal (221) du site Web spécifié (4) pendant l'enregistrement du dispositif d'utilisateur (2) sur un serveur de réseau (3);
ledit procédé d'authentification de réseau comprenant par ailleurs, entre les étapes a) et b), l'étape consistant à configurer le dispositif d'authentification de réseau (1) pour notifier au serveur de réseau (3) que les informations de matériel du dispositif d'utilisateur (2) ont été mémorisées dans le dispositif d'authentification de réseau (1).

4. Procédé d'authentification de réseau selon la revendication 1, **caractérisé par** ailleurs par le fait que:
à l'étape b), le serveur de réseau (3) est par ailleurs configuré pour notifier au dispositif d'authentification de réseau (1) que l'identité du dispositif d'utilisateur (2) doit être vérifiée; et
à l'étape c), le dispositif d'authentification de réseau (1) est configuré pour notifier au serveur de réseau (3) le résultat de la vérification effectuée par celui-ci.

5. Procédé d'authentification de réseau selon l'une quelconque des revendications 1 à 4, **caractérisé par** ailleurs par le fait que:
à l'étape b), les données de vérification envoyées au dispositif d'authentification de réseau (1) sont obtenues en cryptant la liste de matériel à l'aide d'une clé de session; et
à l'étape c), le dispositif d'authentification de réseau (1) est configuré pour décrypter les données de vérification pour obtenir la liste de matériel et pour comparer la liste de matériel avec les informations de matériel (10a à 10c) y mémorisées pour vérifier l'identité du dispositif d'utilisateur (2).

6. Procédé d'authentification de réseau à mettre en oeuvre à l'aide d'un dispositif d'authentification de réseau (8) et d'un dispositif électronique portable (6) pour authentifier le dispositif électronique portable (6), le dispositif électronique portable (6) mémorisant un programme de terminal (631) et comportant une pluralité de composants de matériel présentant, chacun, un code d'identification unique, ledit procédé d'authentification de réseau étant **caractérisé par** les étapes suivantes consistant à:
a) configurer le dispositif d'authentification de réseau (8) pour mémoriser les informations de matériel (633) associées aux codes d'identification des composants de matériel du dispositif électronique portable (6), où l'étape a) comporte les sous-étapes consistant à
a1) configurer le dispositif électronique portable (6) pour exécuter le programme de terminal (631) pour balayer les composants de matériel de celui-ci pour obtenir les codes d'identification des composants de matériel, et pour générer et mémoriser une clé de référence (633) à l'aide des codes d'identification ainsi obtenus,
a2) configurer le dispositif électronique portable (6) pour crypter la clé de référence (633) à l'aide d'une clé de session de manière à obtenir une clé cryptée et pour envoyer la clé cryptée au dispositif d'authentification de réseau (8), et
a3) configurer le dispositif d'authentification de réseau (8) pour décrypter la clé cryptée reçue du dispositif électronique portable (6) pour obtenir la clé de référence (633), ladite clé de référence étant les informations de matériel (633) à mémoriser dans le dispositif d'authentification de réseau (8);
b) lorsqu'il est essayé de vérifier l'identité du dispositif électronique portable (6), configurer le dispositif électronique portable (6) pour exécuter le programme de terminal (631) pour balayer les composants de matériel de celui-ci pour obtenir les codes d'identification des composants de matériel du côté utilisateur, pour établir une nouvelle liste de matériel selon les codes d'identification des composants de matériel ainsi obtenus, et pour envoyer au dispositif d'authentification de réseau (8) les données de vérification qui sont générées à l'aide de la clé de référence;
c) configurer le dispositif d'authentification de réseau (8) pour vérifier l'identité du dispositif électronique portable (6) sur base du rapport entre les données de vérification reçues du dispositif électronique portable (6) à l'étape b) et les informations de matériel (633) mémorisées à l'étape a);
d') lorsque le dispositif électronique portable (6) essaie d'effectuer une transaction électronique avec le dispositif d'authentification de réseau (8), configurer le dispositif électronique portable (6) pour générer une première signature numérique (441) correspondant aux données (41a) de la transaction électronique à l'aide de la clé de référence (633) et pour envoyer les données de transaction (41a) et la première signature numérique (441) au dispositif d'authentification de réseau (8), et configurer le dispositif d'authentification de réseau (8) pour générer une deuxième signature numérique (442) correspondant aux données de transaction (41b) reçues du dispositif électronique portable (6) à l'aide des informations de matériel (633) y mémorisées; et
e') configurer le dispositif d'authentification de réseau (8) pour comparer la première signature numérique (441) du dispositif électronique portable (6) avec la deuxième signature numérique (442) générée par celui-ci, et pour déterminer que les données de transaction (41b) n'ont pas été altérées pendant la transmission du dispositif électronique portable (6) au dispositif d'authentification de réseau (8) lorsque la première signature numérique (441) est en conformité avec la deuxième signature numérique (442).

7. Procédé d'authentification de réseau selon la revendication 6, **caractérisé par** ailleurs par le fait que:
à l'étape b), les données de vérification envoyées au dispositif d'authentification de réseau (8) sont un mot de passe à usage unique (40a) obtenu à l'aide de la clé de référence (633) générée à la sous-étape a1); et
à l'étape c), le dispositif d'authentification de réseau (8) est configuré pour générer un mot de passe à usage unique de référence (40b) à l'aide des informations de matériel y mémorisées et pour comparer les données de vérification (40a) avec le mot de passe à usage unique de référence (40b) pour vérifier l'identité du dispositif électronique portable (6).

8. Procédé d'authentification de réseau selon l'une quelconque des revendications 6 et 7, **caractérisé par** ailleurs par le fait que, à l'étape b), le dispositif électronique portable (6) est configuré pour exécuter le programme de terminal (631) pour générer une nouvelle clé de référence à l'aide des codes d'identification des composants de matériel, pour comparer la nouvelle clé de référence avec la clé de référence (633) générée à la sous-étape a1), et pour générer les données de vérification (40a) lorsque la nouvelle clé de référence est en conformité avec la clé de référence (633).

9. Procédé d'authentification de réseau selon la revendication 1, **caractérisé par** ailleurs par le fait que les informations de matériel (10a à 10c) mémorisées dans le dispositif d'authentification de réseau (1) à l'étape a) et les données de vérification envoyées au dispositif d'authentification de réseau (1) à l'étape b) sont associées aux codes d'identification d'au moins l'un des composants de matériel suivants du dispositif d'utilisateur (2): une unité de traitement centrale (21); une unité de système d'entrée/sortie de base (BIOS) (24); un dispositif de mémoire (22); une interface de réseau (23); une carte mère (20); et un dispositif périphérique externe (251).
